# EUROPEAN PATENT SPECIFICATION

(11) **EP 1 941 945 B1**
(45) Date of publication and mention of the grant of the patent: **18.01.2012**
(21) Application number: 07025213.5
(22) Date of filing: 28.12.2007
(51) Int. Cl.: B01J 23/89, B01J 23/78, B01D 53/94, F01N 3/035

(54) **Catalyst for removing particulate matter and method using the same for removing particulate matter**
Katalysator zum Entfernen von Schwebstoffen und Verfahren dafür zum Entfernen von Schwebstoffen
Catalyseur pour l'élimination de matière particulaire et son procédé d'utilisation pour l'élimination de matière particulaire

(30) Priority: 05.01.2007 JP 2007000650; 29.10.2007 JP 2007280753
(43) Date of publication of application: 09.07.2008
(73) Proprietor: Kabushiki Kaisha Toyota Chuo Kenkyusho, Aichi-Gun Aichi 480-1192 (JP)
(72) Inventor: Nomura, Kazuhiro, Aichi-gun Aichi 480-1192 (JP); Yamazaki, Kiyoshi, Aichi-gun Aichi 480-1192 (JP); Matsunaga, Shinichi, Aichi-gun Aichi 480-1192 (JP)
(74) Representative: Kramer - Barske - Schmidtchen

(56) References cited:
- EP-A- 1 710 009
- DE-A1- 19 828 908
- GB-A- 994 170
- JP-A- 7 155 605
- JP-A- 2003 239 722
- US-A1- 2004 122 115
- US-A1- 2006 156 709
- US-B1- 6 617 276
- US-B1- 6 835 689
- N.S.KOPELEV, A.I.POPOV, M.D.VAL'KOVSKII: "PROPERTY OF THE PRODUCTS OF CsxFeO(2+0.5x) THERMAL COMPOSITION" JOURNAL OF RADIOANALYTICAL AND NUCLEAR CHEMISTRY, vol. 188, no. 2, 2 September 1994 (1994-09-02), pages 99-108, XP002539269 PHILADELPHIA/MOSCOW Retrieved from the Internet: URL:http://www.springerlink.com/content/u0 7x4n3103wjt404/>

## Description

### Introduction

The present invention relates to a catalyst for removing particulate matter, and a method using the same for removing particulate matter.

### Description of Prior Art

An exhaust gas emitted from an internal-combustion engine contains particulate matter (PM), including soot and other carbon particulate materials, generated by combustion. Such particulate matter is known as an air pollutant having an adverse effect on animals and plants. Accordingly, various kinds of catalysts for removing particulate matter have been studied with an aim to reduce particulate matter.

For example, Japanese Unexamined Patent Application Publication No. 2005-66559 (Document 1) and Japanese Unexamined Patent Application Publication No. 2005-21818 (Document 2) discloses a catalyst containing: an oxide support, such as aluminum oxide, zirconium oxide, silicon oxide-aluminum oxide composite, silicon oxide, or zeolite; and an alkali metal component supported on the oxide support. Also, Japanese Unexamined Patent Application Publication No. 2005-125254 (Document 3) discloses a catalyst containing: a zirconium composite oxide support; and an alkali metal supported on the zirconium composite oxide support. Furthermore, Japanese Unexamined Patent Application Publication No. 2006-272288 (Document 4) discloses a catalyst containing: a metal oxide support containing 12 parts by mass of iron oxide; and at least one selected from a group consisting of alkali metals and alkali earth metals supported on the metal oxide support.

However, the conventional catalysts described in the documents 1 to 4 are not necessarily satisfactory in terms of achieving a good balance between particulate matter removing performance and heat tolerance.

US 6,835,689 B1 relates to a catalyst for converting NOₓ in exhaust gases to NH₃, comprising at least one compound represented by the formula AB₁₋ₓMₓO₃, wherein A is a rare earth metal, B is a transition metal, M is a noble metal, and wherein x is in a range from 0 to 0.3.

JP 07-155605 A discloses an exhaust gas purifying catalyst, which is composed of a multicomponent composite oxide containing Pd, Fe and Ce represented by the general formula PdₐFe_{b}Ce_{c}X_{d}YₑO_{f} (X is at least one kind of an element selected from the group consisting of K, Rb, Cs and Ba, Y is at least one kind of an element selected from the group consisting of Cu, Mg, Zn, Ge, Si, Ni, Ag, Cr, La, Sr and Zr, a shows the wt.% of Pd and is a = 0.01 to 3, b, c, d, e and f show atomic ratios of respective components, and, when b is 10, c is 0.1 to 10, d is 0.01 to 5 and e is 0.01 to 5 and f is the number of oxygen atoms necessary for satisfying the valencies of respective components.

DE 198 28 908 A1 discloses a doped Fe-V-oxide catalyst for the selective heterogenous catalytic oxidation of unsaturated hydrocarbons in the gas phase, characterized in that the catalyst is manufactured by reacting alkali or ammonium vanadates or mixtures thereof as solids at 10 to 100°C with stirring for 1 to 8 days with an aqueous solution of an iron salt, separating the solid reaction products at pH 1 to 8 and washing the solid products until they are free of chloride, treating the moist solid with water-soluble doping substances and a reducing agent, and drying the reaction mixture and calcining it at 300 to 500 °C.

US 2004/0122115 A1 relates to a Fischer-Tropsch catalyst comprising Fe, Ag, optionally at least one selected from the group consisting of Mn, Zn and the combination thereof, at least one first promoter selected from the group consisting of Na, Li, K, Rb, Cs and any combination thereof, optionally at least one second promoter selected from the group consisting of Ca, Mg, B, Al and any combination thereof, and at least one structural promoter.

N.S. Kopelev et al., Journal of Radioanalytical and Nuclear Chemistry, vol. 188, no. 2, 1994, 99 to 108, disclose a study on the properties of the products of CsₓFe^{IV}O_{2+0.5x} (x ≈ 1.0) thermal decomposition.

JP 2003-239722 A discloses a diesel particulate filter composed of a ceramic fiber carrying a combined oxide catalyst.

### Statement of Invention

The present invention is made in view of the above-mentioned problem associated with the conventional techniques. An object of the present invention is to provide a catalyst for removing particulate matter and a method using the catalyst for removing particulate matter, the catalyst having sufficiently high performance of removing particulate matter as well as sufficiently high heat tolerance, and thus showing sufficiently high performance of removing particulate matter even after being used under high temperature conditions.

The present inventors have studied diligently in order to achieve the above object. As a result, they have discovered that a catalyst for removing particulate matter, the catalyst having sufficiently high performance of removing particulate matter as well as sufficiently high heat tolerance, and thus showing sufficiently high performance of removing particulate matter even after using under high temperature conditions. This catalyst can be obtained by using a porous support composed of a metal oxide containing not less than 75 mass% of iron oxide, and by then (causing) cesium and/ or a composite oxide of cesium and iron (hereinafter, according to the situation, referred to as "cesium-iron composite oxide") to be supported on the porous support. In this way, the present invention has been completed.

In other words, the present invention is a catalyst for removing particulate matter, with which particulate matter contained in an exhaust gas emitted from an internal-combustion engine is oxidized and removed, the catalyst comprising:
a porous support composed of a metal oxide containing not less than 75 mass% of iron oxide; and
at least any one of cesium and a composite oxide of cesium and iron which is supported on the porous support, wherein the total amount of the cesium (including the cesium in the composite oxide of cesium and iron) supported on the porous support is 5 to 30 parts by mass per 100 parts by mass of the porous support.

In the catalyst for removing particulate matter of the present invention, at least one precious metal selected from a group consisting of ruthenium, rhodium, palladium, silver, iridium, platinum, and gold is preferably further supported on the porous support.

In the catalyst for removing particulate matter of the present invention, the metal oxide preferably further contains at least one selected from a group consisting of cerium oxide, zirconium oxide, aluminum oxide, titanium oxide, and silicon oxide, and contains 75 to 99 mass% of iron oxide.

Furthermore, in the catalyst for removing particulate matter of the present invention, the composite oxide is preferably a composite oxide represented by a compositional formula: CsₓFe_{y}O₂ (where x is a value within a range of 1 to 6, y is a value within a range of 1 to 2, z is a value within a range of 2.5 to 5), more preferably represented by a compositional formula: Cs₆Fe₂O₅.

Also, in the catalyst for removing particulate matter of the present invention, a peak intensity ratio by powder X-ray diffraction between the iron oxide in the porous support and the composite oxide ([the maximum peak intensity of the composite oxide]/[the maximum peak intensity of the iron oxide] is preferably within a range of 1 to 20%.

Furthermore, in the catalyst for removing particulate matter of the present invention, at least one member selected from a group consisting of alkaline earth metals and alkali metals other than cesium may further be supported on the porous support.

The method for removing particulate matter of the present invention (hereinafter also referred to as the "particulate matter removing method") is a method, by which the particulate matter contained in an exhaust gas is oxidized and removed by supplying the exhaust gas into contact with the catalyst for removing particulate matter of the present invention.

The reason why the catalyst for removing particulate matter and the particulate matter removing method of the present invention allow the above objects to be accomplished is not completely clear. However, the present inventors estimate as follows. Specifically, in the catalyst for removing particulate matter of the present invention, the active species of the catalyst is estimated to be a cesium superoxide (CsO₂). In the catalyst for removing particulate matter in which cesium is supported on the porous support, the stability of CsO₂ in the catalyst is estimated to depend on the properties of the support on which cesium is supported. When the acidity of the support is relatively strong, the electrons in CsO₂ are introduced into the support even if CsO₂ is formed. As a result, CsO₂ becomes unstable. Therefore, when the acidity of the support is relatively strong, CsO₂ is difficult to form. On the contrary, the basicity of the support is relatively strong, electrons are donated from the support to CsO₂. As a result, CsO₂ becomes stable. Accordingly, when the basicity of the support is relatively strong, CsO₂ is relatively easily formed.

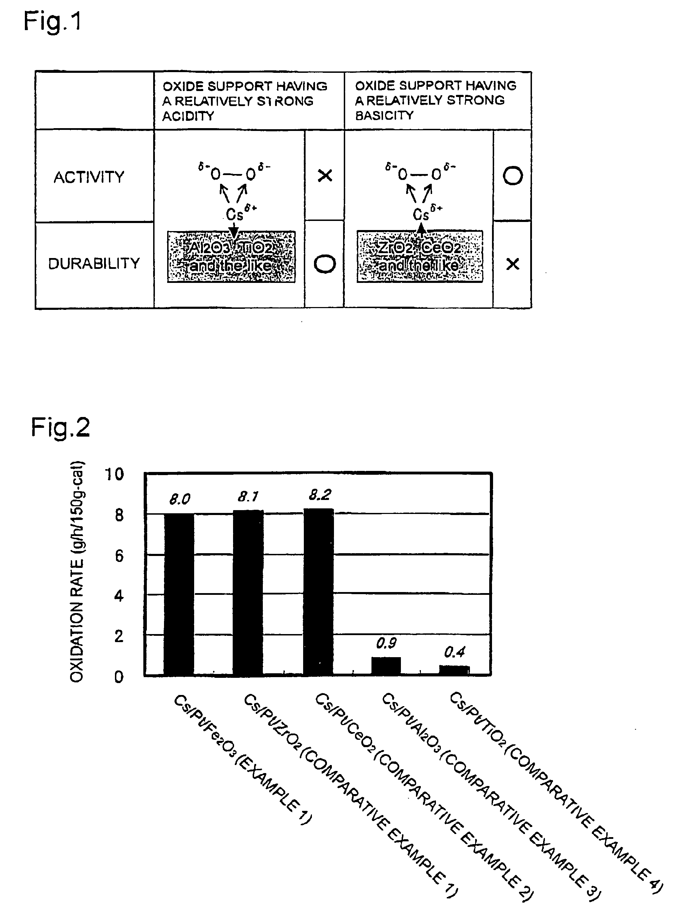

In the catalyst for removing particulate matter containing a porous support on which cesium is supported, the evaporation of cesium supported on the support under a high temperature condition is inhibited by the interaction thereof with the support. Therefore, the heat tolerance of the catalyst is estimated to depend on the properties of the support on which cesium is supported. Cesium is known to show a basic property. When the basicity of the support is relatively strong, enough interaction cannot be obtained between the support and cesium, resulting in the tendency of cesium to be evaporated under a high temperature condition. On the contrary, when the acidity of the support is relatively strong, cesium and the support well interact with each other. As a result, the evaporation of cesium is inhibited. Therefore, the support preferably has a relatively high basicity from the viewpoint of the removing performance of the catalyst. On the other hand, from the viewpoint of heat tolerance, the support preferably has a relatively high acidity (refer to Fig. 1). The present inventors estimate that, in the catalyst for removing particulate matter containing a porous support on which cesium is supported, the formation acceleration of CsO₂ serving as an active species of the catalyst, and the inhibition of evaporation of cesium under a high temperature condition are simultaneously accomplished, resulting in the simultaneous exhibition of a sufficiently high particulate matter removing performance and a sufficiently high heat tolerance, since a suitable degree of acidity and basicity for cesium is provided to the support by using a porous support composed of a metal oxide containing 50 mass% or more of iron oxide.

When the catalyst for removing particulate matter of the present invention contains a porous support, and a cesium-iron composite oxide, the stability of CsO₂ in the catalyst depends mainly on the properties of Fe in the composite oxide. In other words, in the cesium-iron (Fe) composite oxide, cesium and iron are well dispersed at an atomic level. As a result, cesium tends to be mainly subjected to oxidization by Fe in the composite oxide. It is estimated that, in such a composite oxide, CsO₂ formation is accelerated by the oxidizing properties of Fe, and stabilized with more sufficiently. It is estimated that the evaporation of cesium is more sufficiently inhibited because cesium and iron oxide well interact with each other at an atomic level in the composite oxide in the catalyst for removing particulate matter containing a porous support on which a cesium-iron composite oxide is supported. When the catalyst for removing particulate matter of the present invention contains the porous support and the cesium-iron composite oxide which is supported on the porous support, the porous support composed of a metal oxide containing 50 mass% or more of iron oxide is used. Consequently, a suitable degree of acidity and basicity is provided to supported components (the composite oxide, or cesium and the composite oxide). Therefore, the present inventors estimate that, in the present invention, the formation of CsO₂ serving as the active species of the catalyst, and the advanced inhibition of the evaporation of cesium under high temperature condition are simultaneously accomplished in the catalyst for removing particulate matter containing a porous support and a cesium-iron composite oxide which is supported on the porous support, resulting in the simultaneous exhibition of a sufficiently high particulate matter removing performance and a sufficiently high heat tolerance.

The present invention can provide a catalyst for removing particulate matter and a method using the catalyst for removing particulate matter, the catalyst having sufficiently high performance of removing particulate matter as well as sufficiently high heat tolerance, and thus showing sufficiently high performance of removing particulate matter even after using under high temperature conditions.

### Description of Drawings

Fig. 1 is a schematic representation showing the relationship between the activity and durability of a metal oxide.
Fig. 2 is a graph showing the oxidation rate of the catalyst for removing particulate matter obtained in Example 1 and Comparative examples 1 to 4.
Fig. 3 is a graph showing the oxidation rate of the catalyst for removing particulate matter obtained in Examples 1 to 3 and Comparative example 5.
Fig. 4 is a graph showing the oxidation rate of the catalyst for removing particulate matter obtained in Example 1 and Comparative examples 1 and 2 after subjected to thermal treatment and hydrothermal treatment.
Fig. 5 is a graph showing the content of cesium contained in the catalyst for removing particulate matter obtained in Example 1 and Comparative examples 1 and 2.
Fig. 6 is a graph showing the oxidation rate of the catalyst for removing particulate matter obtained in Examples 1 and 4 before and after subjected to sulfur poisoning treatment.
Fig. 7 is a graph showing powder X-ray diffraction (XRD) pattern of each catalyst for removing particulate matter sampled from the coat layer of each filter type catalyst obtained in Examples 5 to 7.
Fig. 8 is a graph showing an oxidation rate of a filter type catalyst obtained in Examples 5 to 7 and Comparative example 6 after a heat tolerance test

### Description of Specific Embodiments

The present invention will be described below in detail in line with preferred embodiments.

First, the catalyst for removing particulate matter of the present invention will be described. Specifically, the present invention is a catalyst for removing particulate matter, with which particulate matter contained in an exhaust gas emitted from an internal-combustion engine is oxidized and removed, the catalyst comprising:
a porous support composed of a metal oxide containing not less than 75 mass% of iron oxide; and
at least any one of cesium and a composite oxide of cesium and iron(cesium-iron composite oxide) which is supported on the porous support, wherein the total amount of the cesium (including the cesium in the composite oxide of cesium and iron) supported on the porous support is 5 to 30 parts by mass per 100 parts by mass of the porous support.

The porous support related to the present invention is composed of a metal oxide containing not less than 75 mass% of iron oxide. If such a metal oxide contains less than 75 mass% of iron oxide, the acidity or basicity of the metal oxide is relatively strong, resulting in the impossibility to achieve the compatibility between the particulate matter removing performance and heat tolerance of the catalyst. For this reason, in the present invention, a suitable degree of acidity or basicity to cesium and/or a cesium-iron composite oxide can be provided to the porous support by causing the metal oxide to contain not less than 75 mass% of iron oxide, resulting in the capability to achieve the compatibility between the particulate matter removing performance and the heat tolerance. The metal oxide preferably contains iron oxide at a higher content ratio, more preferably at the ratio of 95 mass% or more from the viewpoint of achieving the compatibility between the removing performance and the heat tolerance at a higher level.

The metal oxide can contain the other oxide in addition to iron oxide in the porous support related to the present invention to improve the retaining performance of the specific surface area. The other oxide preferably contains at least one selected from a group consisting of cerium oxide, zirconium oxide, aluminum oxide, titanium oxide, and silicon oxide. When containing the other oxide, the metal oxide contains 75 to 99 mass% of iron oxide. When the content ratio of iron oxide in the metal oxide exceeds the upper limit, the sufficient effect (for example, increase in specific surface area) of the other oxide tends not to be obtained.

When the catalyst for removing particulate matter of the present invention contains the porous support, and the cesium-iron composite oxide supported on the porous support, a metal oxide having higher basicity than iron oxide is preferably contained in the porous support from the viewpoint of improving the retaining performance of the specific surface area without interfering with the reaction between cesium and iron oxide. Such a metal oxide having higher basicity than iron is not particularly limited, but cerium oxide, zirconium oxide, yttrium oxide, and lanthanum oxide are preferable. Cerium oxide and zirconium oxide are more preferable.

When the metal oxide having higher basicity than iron is contained in the porous support, the content ratio of the metal oxide having higher basicity than iron is preferably 1 to 50 mass%, more preferably 1 to 25 mass%. When the content ratio of the metal oxide having higher basicity than iron is less than the lower limit, the sufficient effect (for example, increase in specific surface area) of the oxide tends not to be obtained. On the contrary, when the content ratio of such a metal oxide having higher basicity than iron exceeds the upper limit, basicity is relatively strong. As a result, the compatibility between the activity and heat tolerance of the catalyst tends not to be achieved.

The shape of the porous support is not particularly limited, and can suitably be any of a pellet shape and a monolith shape in accordance with an application. When the monolith shape of these shapes is employed, a straight honeycomb substrate or diesel particulate filter substrate may be coated with the porous support. The substrate includes the ones made of cordierite, silicon carbide, or aluminum titanate.

The specific surface area of the porous support is not particularly limited, and preferably 1 m²/g to 200m²/g, more preferably 10m²/g to 100m²/g. When the specific surface area exceeds the upper limit, the porous support tends to be calcinated, resulting in the tendency for the obtained heat tolerance of the catalyst to be reduced. On the contrary, when the specific surface area is less than the lower limit, the dispersion properties of an alkali metal component tends to be reduced. Such a specific surface area can be calculated as a BET specific surface area from an adsorption isotherm using a BET isotherm adsorption equation

A method for producing the porous support is not particularly limited, and can suitably employ a well known method which allows the porous support composed of the metal oxide to be produced. A metal oxide such as commercially available iron oxide can be used as it is or by mixing the same as the porous support.

As the iron oxide, at least one selected from a group consisting of FeO, Fe₂O₃, Fe₃O₄, and FeO₂ is preferably used. Fe₂O₃ is more preferably used because the stability under high temperature conditions and the dispersion properties in an aqueous solution in preparing the catalyst are relatively good.

In the present invention, cesium and/or a cesium-iron composite oxide is supported on the porous support. The total amount of cesium (including cesium supported in the form of a composite oxide) supported on such a porous support is 5 to 30 parts by mass per 100 parts by mass of the porous support, preferably 5 to 20 parts by mass. When the amount of such cesium is less than the lower limit, sufficient catalyst activity tends not to be obtained. On the contrary, when the amount of such a cesium exceeds the upper limit, a problem that an excessive amount of cesium is evaporated under high temperature conditions tends to be occurred. A method for supporting such a cesium on the porous support is not particularly limited, and can suitably employ a well known method which allows cesium to be supported on the support. For example, a method, by which an aqueous solution containing the salt of cesium is impregnated in the porous support to then dry and calcinate the same, may be employed.

When the catalyst for removing particulate matter of the present invention contains the porous support and cesium-iron composite oxide supported on the porous support, the cesium-iron composite oxide is not particularly limited, and is preferably a composite oxide represented by a compositional formula: CsₓFe_{y}Oₓ (where x is values within a range of 1 to 6 (more preferably 4 to 6), y is values within a range of 1 to 2 (more preferably 1.5 to2), z is values within a range of 2.5 to 5 (more preferably 4 to 5)), more preferably a composite oxide represented by a compositional formula: Cs₆Fe₂O₅ from the viewpoint of achieving the compatibility between the activity and the heat tolerance at a higher level. In such a composite oxide, Fe is present in a position close to cesium. It is estimated that cesium consequently tends to be subjected to oxidation action by Fe, resulting in the acceleration of the formation of CsO₂ as well as the more effective inhibition of the evaporation of cesium.

When the catalyst for removing particulate matter of the present invention contains the porous support, and a cesium-iron composite oxide supported on the porous support, the ratio of the maximum peak intensity by powder X-ray diffraction of the iron oxide in the porous support and the maximum peak intensity by powder X-ray diffraction of the composite oxide ([the maximum peak intensity of the composite oxide]/[the maximum peak intensity of the iron oxide]: peak intensity ratio) is preferably within a range of 1 to 20% (more preferably 2 to 10%). In other words, in the present invention, the cesium-iron composite oxide is preferably contained in the catalyst for removing particulate matter so that the peak intensity ratio by powder X-ray diffraction of the iron oxide, and the composite oxide in the porous support is within the range. When the peak intensity ratio of the iron oxide and the composite oxide in the porous support is less than 1%, the sufficient effect of the composite oxide tends not to be obtained. On the contrary, when the ratio exceeds 20%, any more effect of the composite oxide tends not to be obtained. The "maximum peak" referred to here is the maximum one of the peaks having an intensity difference of a height from a base line to a peak top of 100cps or more within a range of 2θ angle of an X-ray diffraction pattern of 20° to 40° obtained using an X-ray source of CuKα. In the iron oxide in the porous support, main peaks which are candidate of the maximum peak appear in positions at 24.0° to 24.3°, 33.1° to 33.4°, and 35.5° to 35.8° within a range of the 2θ angle of an X-ray diffraction pattern of 20° to 40°. On the other hand, in the composite oxide, main peaks which are candidate of the maximum peak appear in positions at 27.0° to 27.3°, and 28.3° to 28.6° within a range of the 2θ angle of an X-ray diffraction pattern of 20° to 40°. Such an intensity ratio can be calculated using the following equation: [Intensity ratio]=([the maximum peal intensity of the composite oxide]/[the maximum peak intensity of iron oxide])×100. For example, as such a method for measuring X-ray diffraction, a method, by which measuring is carried out using powder X-ray diffraction equipment RINT-TTRIII available from Rigaku Corporation as measurement equipment, and using CuKα-ray under conditions including 50KV, 300mA, and a step angle of 0.01° can be employed.

A method for obtaining the catalyst for removing particulate matter containing the porous support and the cesium-iron composite oxide supported on the porous support is not particularly limited. As such a method, for example, a method for obtaining the catalyst for removing particulate matter by impregnating an aqueous solution containing the salt of cesium in the porous support, by then drying the support, and by subsequently calcinating the same at 700°C to 900°C (preferably at 750°C to 850°C) for about 1 to 10 hours to form the composite oxide on the surface of the porous support may be employed. When such a calcinating temperature and a calcinating time is less than the lower limit, the formation of the composite oxide is not accelerated, and cesium tends to be difficult to support as the cesium-iron composite oxide. On the contrary, when such a calcinating temperature and a calcinating time exceed the upper limit, the composite oxide tends to be decomposed, resulting in the tendency for the activity to be reduced. When the method is employed, the amount of the composite oxide formed on the porous support can be changed by suitably changing conditions such as the calcinating temperature and the calcinating time.

In the present invention, the porous support preferably further supports at least one precious metal selected from a group consisting of ruthenium, rhodium, palladium, silver, iridium, platinum, and gold from the viewpoint of providing a higher particulate matter removing performance as well as HC and CO removing performance to the obtained catalyst. Of these precious metal components, platinum, rhodium, or palladium is preferably used from the viewpoint of providing a higher performance of oxidizing the particulate matter, particularly preferably platinum. These precious metals can be used in one kind or in combination of two or more kinds.

The supported amount of such a precious metal is not particularly limited, and is preferably 0.1 to 10 parts by mass per 100 parts by mass of the porous support, more preferably 1 to 5 parts by mass. When the supported amount of the precious metal is less than the lower limit, the sufficient effect of the precious metal tends not to be obtained. On the contrary, when the supported amount of the precious metal exceeds the upper limit, a problem of the increase in cost tends to occur. A method for supporting such a precious metal component on the porous support is not particularly limited, and can suitably employ a well known method which allows the precious metal to be supported on the support. For example, a method, by which an aqueous solution containing the salt (for example, dinitrodiammine salt) or complex (for example, tetraammine complex) of the precious metal is impregnated in the porous support, dried, and then calcinated, may be employed.

In the present invention, at least one member selected from a group consisting of alkaline earth metals (magnesium, calcium, strontium, and barium) and alkali metals (lithium, sodium, and potassium) other than cesium may further be supported on the porous support. Supporting the alkali metal (other than cesium) and/or the alkaline earth metal as well as cesium and/or the composite oxide on the porous support creates active species for NOx and a nitrate in the exhaust gas, resulting in the tendency to improve NOx decomposing performance. A method for supporting the other alkali metal is not particularly limited, and can suitably employ the same method as the above-mentioned method for supporting cesium.

The form of the catalyst for removing particulate matter of the present invention is not particular limited, and can employ, for example, a monolith catalyst of a honeycomb shape, and a pellet catalyst of a pellet shape. The substrate used here is not particularly limited, and can suitably employ a particulate filter substrate (DPF substrate), a monolith-like substrate, a pellet-like substrate, and a plate-like substrate. The material of such a substrate is not particularly limited. A substrate made of ceramics such as cordierite, silicon carbide, mullite, and aluminum titanate, and a substrate made of a metal such as a stainless steel containing chrome, and aluminum can suitably be employed.

The catalyst for removing particulate matter of the present invention is described above. The method for removing particulate matter of the present invention will be described below. Specifically, the method for removing particulate matter of the present invention is the method in which the particulate matter is removed by contacting the described catalyst for removing particulate matter of the present invention with an exhaust gas to oxidize the particulate matter contained in the exhaust gas. In this manner, the method for removing the particulate matter of the present invention uses the described catalyst for removing particulate matter of the present invention, and therefore allows sufficiently high particulate matter removing performance as well as sufficiently high heat tolerance, resulting in the capability to exhibit sufficiently high particulate matter removing performance after the catalyst is used under a high temperature condition, and to oxidize the particulate matter with sufficiently high activity over a long period of time for removing the same.

### [Example]

The present invention will more specifically be described below based on examples and comparative examples. The present invention is not limited to the following examples, wherein examples containing less than 75 mass% of iron oxide are given for comparative purposes only.

### (Example 1)

A catalyst for removing particulate matter containing a porous support composed of 100 mass% of iron oxide, cesium supported on the porous support, and platinum supported on the porous support (Cs/Pt/Fe₂O₃ (100 mass%) was prepared. In other words, 50g of Fe₂O₃ (Trade name: TIC8048 available from TODA KOGYO CORP.), 21.9g of aqueous solution of dinitrodiammine platinum (Pt (NH3)2(NO2)2) having a Pt concentration of 4.57 weight% (available from Tanaka Kikinzoku Kogyo), 9.99g of CsOH (available from Wako Pure Chemical Industries Ltd.), and 500g of ion-exchanged water were first mixed. Thereafter, the mixture was evaporated to dryness at a temperature condition of 80°C for 3 hours to obtain a catalyst precursor. Subsequently, the obtained catalyst precursor was dried in the air at a temperature condition of 110°C for 12 hours, and then calcinated in the air at a temperature condition of 500°C for 3 hours. Then, the catalyst precursor calcinated in this manner was pulverized by powder-compacting-molding the same to be of a pellet shape (particle diameter: 150µm to 250µm), and then calcinated in the air at a temperature condition of 750°C for 5 hours to obtain the catalyst for removing particulate matter of the present invention.

### (Example 2)

The catalyst for removing particulate matter of the present invention containing a porous support composed of 75 mass% of iron oxide, and of 25 mass% of aluminum oxide, cesium supported on the porous support, and platinum supported on the porous support (Cs/Pt/Fe₂O₃ (75 mass%)-Al₂O₃ (25 mass%)) was obtained in the same manner as in Example 1 except for using an oxide mixture composed of 37.5g of Fe₂O₃ (Trade name: TIC8048 available from TODA KOGYO CORP.), and 12.5g of Al₂O₃ (Trade name: NST5 available from NIKKI-UNIVERSAL CO., LTD.) in place of 50g of Fe₂O₃.

### (Example 3)

The catalyst for removing particulate matter of the present invention containing a porous support composed of 50 mass% of iron oxide, and of 50 mass% of aluminum oxide, cesium supported on the porous support, and platinum supported on the porous support (Cs/Pt/Fe₂O₃ (50 mass%) -Al₂O₃ (50 mass%)) was obtained in the same manner as in Example 1 except for using an oxide mixture composed of 25g of Fe₂O₃ (Trade name: TIC8048 available from TODA KOGYO CORP.), and 25g of Al₂O₃ (Trade name: NST5 available from NIKKI-UNIVERSAL CO., LTD.) in place of 50g of Fe₂O₃.

### (Example 4)

The catalyst for removing particulate matter of the present invention containing a porous support composed of 100 mass% of iron oxide, and cesium supported on the porous support (Cs/Fe₂O₃ (100 mass%)) was obtained in the same manner as in Example 1 except for not using an aqueous solution of dinitrodiammine platinum.

### (Comparative example 1)

The catalyst for removing particulate matter for comparison containing a porous support composed of 100 mass% of zirconium oxide, cesium supported on the porous support, and platinum supported on the porous support (Cs/Pt/ZrO₂ (100 mass%)) was obtained in the same manner as in Example 1 except for using ZrO₂ (Trade name: RC100 available from DAIICHI KIGENSO KAGAKU KOGYO CO., LTD.) in place of Fe₂O₃.

### (Comparative example 2)

The catalyst for removing particulate matter for comparison containing a porous support composed of 100 mass% of cerium oxide, cesium supported on the porous support, and platinum supported on the porous support (Cs/Pt/ceO₂ (100 mass%)) was obtained in the same manner as in Example 1 except for using CeO₂ (Trade name: Cerium oxide available from DAIICHI KIGENSO KAGAKU KOGYO CO., LTD.) in place of Fe₂O₃.

### (Comparative example 3)

The catalyst for removing particulate matter for comparison containing a porous support composed of 100 mass% of aluminum oxide, cesium supported on the porous support, and platinum supported on the porous support (Cs/Pt/ Al₂O₃ (100 mass%)) was obtained in the same manner as in Example 1 except for using Al₂O₃ (Trade name: NST5 available from NIKKI-UNIVERSAL CO., LTD.) in place of Fe₂O₃.

### (Comparative example 4)

The catalyst for removing particulate matter for comparison containing a porous support composed of 100 mass% of titanium oxide, cesium supported on the porous support, and platinum supported on the porous support (Cs/Pt/ TiO₂ (100 mass%)) was obtained in the same manner as in Example 1 except for using TiO₂ (Trade name: TTO51A available from ISHIHARA SANGYO KAISHALTD.) in place of Fe₂O₃.

### (Comparative example 5)

The catalyst for removing particulate matter for comparison containing a porous support composed of 25 mass% of iron oxide, and of 75 mass% of aluminum oxide, cesium supported on the porous support, and platinum supported on the porous support (Cs/Pt/Fe₂O₃ (25 mass%) -Al₂O₃ (75 mass%)) was obtained in the same manner as in Example 1 except for using an oxide mixture composed of 12.5g of Fe₂O₃ (Trade name: TIC8048 available from TODA KOGYO CORP.), and 37.5g of Al₂O₃ (Trade name: NSTS available from NIKKI-UNIVERSAL CO., LTD.) in place of 50g of Fe₂O₃.

### [Evaluation of the performance of the catalyst for removing particulate matters obtained in Examples 1 to 4 and Comparative examples 1 to 5]

### <Test of activity of oxidizing particulate matter>

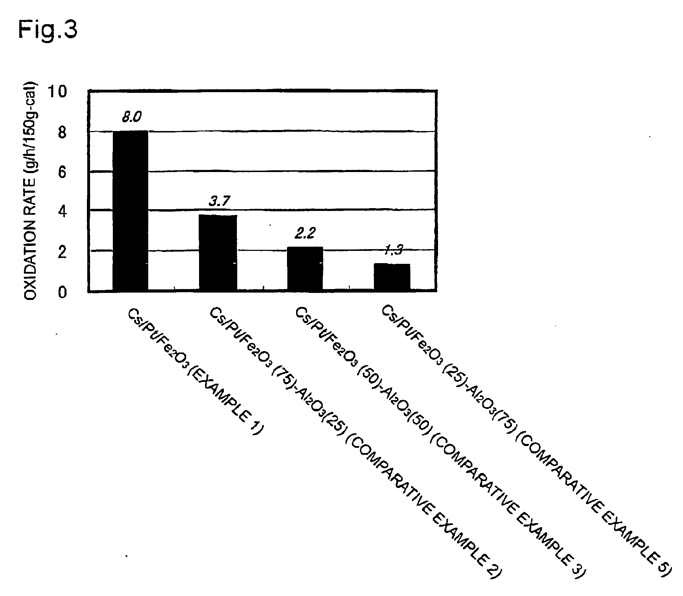

A particulate matter oxidizing activity test was carried out respectively on the catalyst for removing particulate matters obtained in Examples 1 to 3 and Comparative examples 1 to 5. Specifically, 0.475g of the catalyst for removing particulate matter, and 0.025g of carbon black (available from Tokai Carbon Co. Ltd.) serving as a model particulate matter were first added in a cylindrical tubular sample bottle. Thereafter, the mixture of the catalyst for removing particulate matter and the carbon black were stirred by rotating the cylindrical tubular sample bottle for 6 hours to obtain a sample in which the carbon black adhered on the outer surface of the catalyst for removing particulate matter. Subsequently, 0.5g of the obtained sample was filled in a quartz tube having a diameter of 30mm and a length of 300mm. Then, a mixture gas composed of O₂ (10 volume%)/H₂O (10 volume%)/N₂ (80 volume%) was supplied to the sample at a flow rate of 30L/minute. It should be noted that the temperature of the gas mixture (inflow gas) was increased at a temperature increasing rate of 20°C/minute from an initial temperature of 200°C. An oxidation rate was determined by measuring the concentrations of CO₂ and CO in outflow gas at a temperature condition of 390°C to 360°C (a temperature that causes the temperature of the catalyst bed to be at 300°C) of the inflow gas. After measuring the concentrations of CO₂ and CO in outflow gas emitted from the quartz tube at a temperature condition of 340°C to 360 °C of the inflow gas to calculate the oxidized amount of the carbon black at the same temperature, the oxidation rate was calculated by converting the calculated oxidized amount to an oxidation rate per one hour and per 150g of the catalyst. Figs 2 and 3 show the obtained result.

As seen from the results shown in Figs 2 and 3, it was recognized that the catalyst for removing particulate matters obtained in Examples 1 to 3 and Comparative examples 1 and 2 allow the particulate matter to be oxidized at a sufficient oxidation rate. On the other hand, it was recognized that the catalyst for removing particulate matters obtained in Comparative examples 3 to 5 do not allow the particulate matter to be oxidized at a sufficient oxidation rate.

When discussing the result shown in Fig. 2, the catalyst for removing particulate matters obtained in Example 1 and Comparative examples 1 to 4 were different from each other only in the kind of the porous support (metal oxide) in the catalysts. Then, when focusing attention on the kind of the metal oxide, it was seen that the metal oxide was ranked from the viewpoint of contributing to the oxidation rate in the following order: Fe₂O₃≈ZrO₂≈CeO₂>>Al₂O₃>TiO₂. From these results, it was recognized that metal oxides such as ZrO₂ and CeO₂ which exhibit a relatively strong basicity to cesium, and metal oxides such as Fe₂O₃ which exhibit moderate acidity and basicity to cesium serve as an effective support to improve particulate matter removing activity. On the contrary, it was recognized that metal oxides such as Al₂O₃, and TiO₂ which exhibit relatively strong acidity to cesium do not serve as an effective support to improve particulate matter removing activity.

Then, when discussing the results shown in Fig. 3, the catalyst for removing particulate matters obtained in Examples 1 to 3 and Comparative example 5 were different from each other only in the content ratio of iron oxide (Fe₂O₃) in a porous support (metal oxide). Then, when focusing attention on the content ratio of iron oxide in the metal oxide, it was seen that the metal oxide was ranked from the viewpoint of contributing to the oxidation rate in the following order: Fe₂O₃ (100 mass%) > Fe₂O₃ (75 mass-%)-Al₂O₃ (25 mass%) > Fe₂O₃ (50 mass%) - Al₂O₃(50 mass%) > Fe₂O₃ (25 mass%) - Al₂O₃ (75 mass%). From these results, it was recognized that an oxidation rate was reduced when the content ratio of Fe₂O₃ is reduced. The average emitted amount of the particulate matter (PM) from a diesel engine generally is 2g/h/L at an average exhaust gas temperature of about 300°C. Therefore, when estimating a construction in which about 150g of the catalyst is used per 1L of a monolith substrate, an oxidation rate is required to be at about 2g/h/150g-cat or more. Consequently, it was recognized that the content ratio of fe₂O₃ is necessary to be not less than 75 weight% to obtain a desired oxidation rate.

### <Particulate matter oxidizing activity test on a catalyst for removing particulate matter after thermal treatment or hydrothermal treatment>

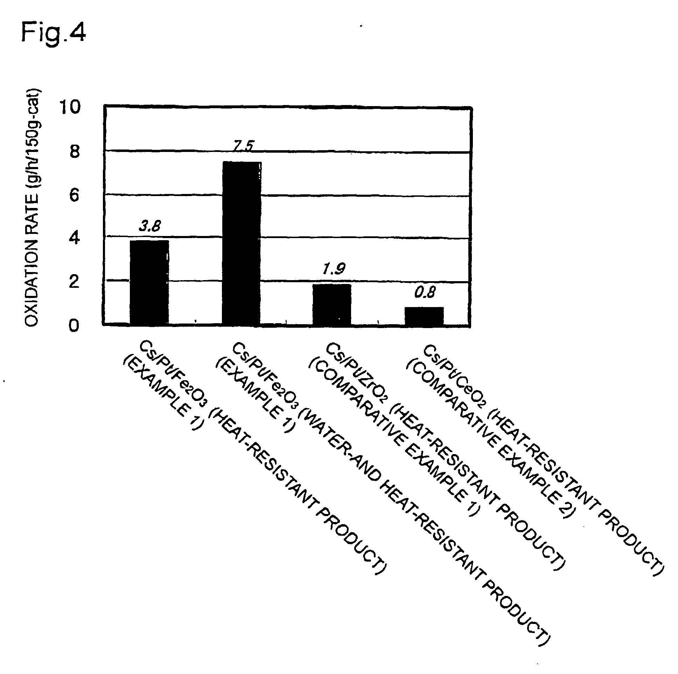

A particulate matter oxidizing activity test--the same as the above-mentioned particulate matter oxidizing activity test--was carried out on the catalyst for removing particulate matter obtained in Example 1 and Comparative examples 1 and 2, after carrying out thermal treatment or hydrothermal treatment on the same. Fig. 4 shows the obtained results. The methods of thermal treatment and hydrothermal treatment are as described below.

### (Thermal treatment)

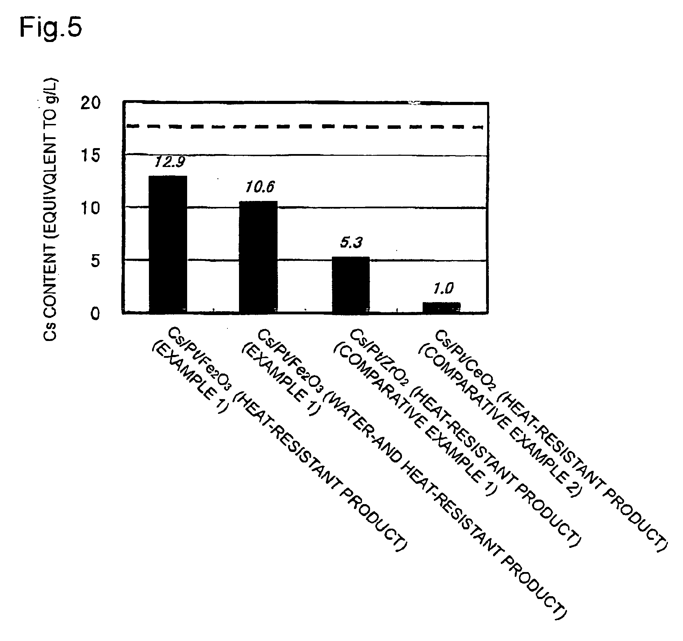

The thermal treatment is a treatment in which the catalyst for removing particulate matter is heated in the air at a temperature condition of 750°C for 50 hours. The catalyst for removing particulate matter on which the thermal treatment has been carried out is referred to as heat-resistant product in Figs. 4 and 5.

### (Hydrothermal treatment)

The hydrothermal treatment is a treatment in which the catalyst for removing particulate matter is heated in the air containing 3 volume% of H₂O at a temperature condition of 750°C for 50 hours. The catalyst for removing particulate matter on which the hydrothermal treatment has been carried out is referred to as hydrothermally resistant article in Figs. 4 and 5.

### <Analysis of the content of cesium in the catalyst for removing particulate matter after thermal treatment or hydrothermal treatment>

The content of cesium (Cs) was measured by an ICP spectroscopy analysis after carrying out the above-mentioned thermal treatment or hydrothermal treatment on the catalyst for removing particulate matter obtained in Example 1 and Comparative examples 1 and 2. Fig. 5 shows the obtained results. The content of Cs in Fig. 5 is represented by mass where the mass of the porous support is 100.

As seen from the results shown in Figs. 4 and 5, it was recognized that the content of Cs in the catalyst was significantly reduced due to thermal treatment relative to the fed amount of Cs in the catalyst for removing particulate matter using ZrO₂ or CeO₂ as the porous support obtained in Comparative examples 1 and 2. It is estimated that these results were caused by a loss of Cs component from the catalyst due to evaporation. It was also recognized that the oxidation rate was significantly reduced due to thermal treatment in the catalyst for removing particulate matter obtained in Comparative examples 1 and 2, as compared to the oxidation rate of the catalyst for removing particulate matter before thermal treatment shown in Fig. 2, resulting in the impossibility to obtain a desired oxidation rate in the heat-resistant product. From these results, it was seen that a metal oxide, such as ZrO₂ and CeO₂, exhibiting a relatively strong basicity to cesium is unsuitable to be used as a porous support from the viewpoint of the durability of a catalyst.

On the other hand, the reduction in the content of Cs was sufficiently inhibited after thermal treatment and hydrothermal treatment in the catalyst for removing particulate matter using Fe₂O₃ as a porous support obtained in Example 1 as compared to the catalyst for removing particulate matter obtained in Comparative examples 1 and 2. It is estimated that these results were obtained by using Fe₂O₃ as a porous support, resulting in the inhibition of the evaporation of Cs component. It was also recognized that the oxidation rate was not drastically reduced even when carrying out thermal treatment or hydrothermal treatment in the catalyst for removing particulate matter obtained in Example 1 as compared to the oxidation rate of the catalyst for removing particulate matter before thermal treatment shown in Fig.2, resulting in the capability to obtain a desired oxidation rate of the heat-resistant product and the water- and heat-resistant product. From these results, it was seen that Fe₂O₃ has a moderate acidity and basicity to Cs, and therefore is effective for the improvement in the durability.

### <Particulate matter oxidizing activity test on the catalyst for removing particulate matter after sulfur poisoning treatment>

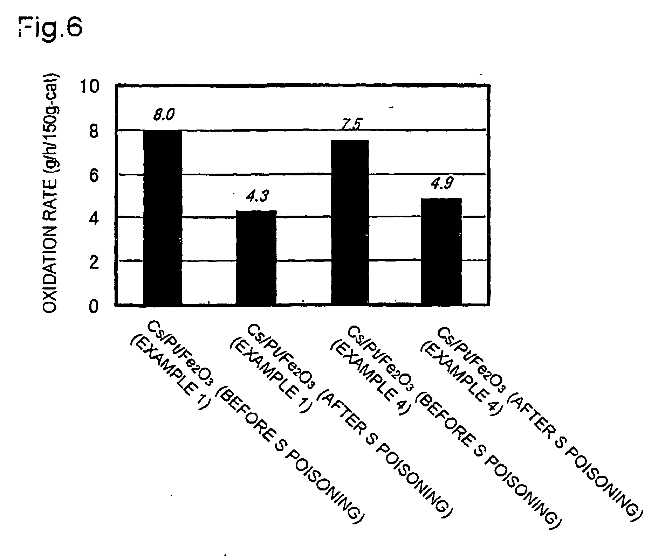

The particulate matter oxidizing activity test--the same as the above-mentioned particulate matter oxidizing activity test--was carried out on the catalyst for removing particulate matter obtained in Examples 1 and 4, after carrying out sulfur poisoning treatment. Fig. 6 shows the obtained results. The method of sulfur poisoning treatment is as described below.

### (Sulfur poisoning treatment)

The sulfur (S) poisoning treatment is a treatment in which a gas mixture composed of SO₂ (30ppm) /O₂(10%)/CO₂ (10%) /H₂O (10%)/N₂ (balance) is supplied at a flow rate of 30L/minute at an inflow gas temperature condition of 350°C for 40 minutes to the catalyst for removing particulate matter obtained in Examples 1 and 4.

As seen from the results shown in Fig. 6, it was recognized that, regardless of whether platinum (Pt) is supported or not, an approximately equal oxidation rate was obtained in the catalyst for removing particulate matter of the present invention (Examples 1 and 4). It was also recognized that the reduction in catalyst activity due to sulfur poisoning can be inhibited at a higher level without supporting platinum (Example 1).

### (Example 5)

A catalyst for removing particulate matter containing a porous support composed of 100 mass% of iron oxide, and a cesium-iron composite oxide supported on the porous support was prepared. Specifically, a cylindrical DPF (Diesel Particulate Filter: a diameter of 30mm, a height of 50mm, a volume of 35 mL, a weight of 14g, a cell density of 300 cell/in2, an average pore diameter of 27µm, a pore ratio of 67%, a wall thickness of 0.3mm) was first impregnated with an aqueous solution of iron nitrate so that the supported amount of iron oxide was 150g/L. Thereafter, the filter was dried in the air at a temperature condition of 110°C for 12 hours, and subsequently calcinated in the air at a temperature condition of 500°C for 3 hours to obtain a filter type iron oxide support. Then, the filter type iron oxide support was impregnated with an aqueous solution of cesium hydroxide so that the supported amount of cesium was 0.2mol/L. Thereafter, the filter was dried in the air at a temperature condition of 110°C for 12 hours, and subsequently calcinated in the air at a temperature condition of 850°C for 5 hours (hereinafter, such a calcinating process was referred to as "final calcinating process") to obtain a filter type catalyst in which a catalyst for removing particulate matter was supported on the DPF. The catalyst for removing particulate matter is a catalyst which contains a porous support composed of 100 mass% of iron oxide, and a cesium-iron composite oxide supported on the porous support.

### (Example 6)

A filter type catalyst on which the catalyst for removing particulate matter was supported was obtained in the same manner as in Example 5, except for changing the calcinating temperature in the final calcinating process from 850°C to 800°C.

### (Example 7)

A filter type catalyst on which the catalyst for removing particulate matter was supported was obtained in the same manner as in Example 5, except for changing the calcinating temperature in the final calcinating process from 850°C to 750°C.

### (Comparative example 6)

A filter type catalyst was obtained in the same manner as in Example 5, except for supporting zirconium oxide instead of supporting iron oxide. Here, the filter type catalyst was a catalyst in which a catalyst for removing particulate matter for comparison contains a porous support composed of 100 mass% of zirconium oxide, and contains cesium supported on the porous support. The catalyst for removing particulate matter for comparison was supported on the filter type catalyst, which was obtained by impregnating with an aqueous solution of zirconium oxynitrate so that the supported amount of zirconium oxide was 150g/L.

### [Evaluation of the performance of the catalyst for removing particulate matter obtained in Examples 5 to 7 and Comparative example 6]

### <X-ray diffraction (XRD) measurement>

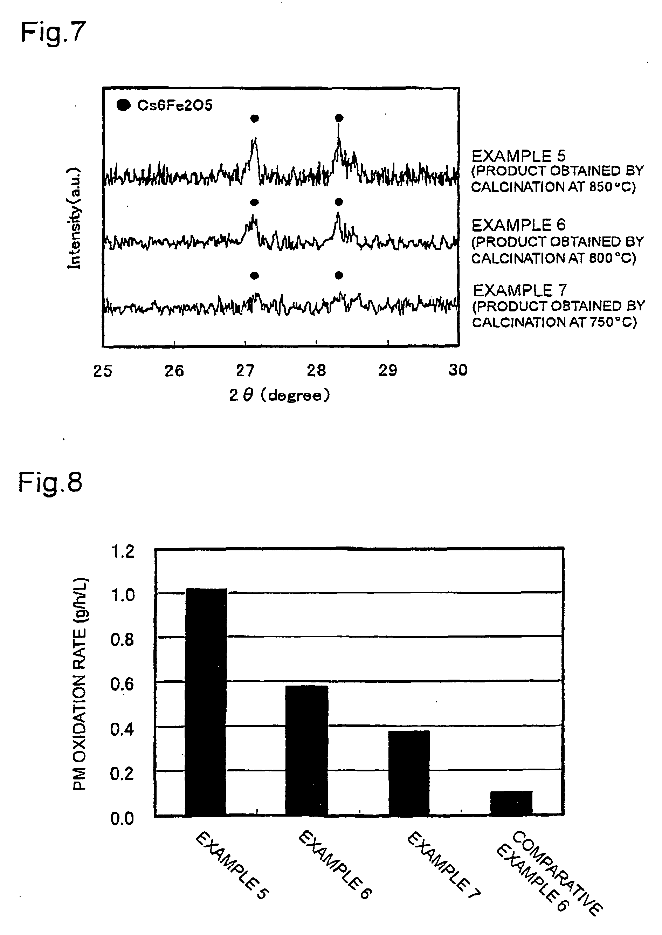

X-ray diffraction (XRD) measurement was carried out on the catalyst for removing particulate matter sampled from the coat layer in each filter type catalyst obtained in Examples 5 to 7. Such an XRD measurement was carried out under conditions including CuKα-ray, 50KV, 300mA, and a step angle of 0.01° using the catalyst for removing particulate matter taken from each filter type catalyst obtained in Examples 5 to 7 as a sample, and using "RINT-TTRIII (trademark)" available from Rigaku Corporation as measurement equipment. Fig. 7 shows the obtained results.

As seen from the results shown in Fig.7, a peak derived from Cs₆Fe₂O₅ (composite oxide) was recognized in addition to the peak of iron oxide (α-Fe₂O₃) in the porous support in the catalyst for removing particulate matter in each filter type catalyst obtained in Examples 5 to 7. The intensity of the peak derived from such a composite oxide was recognized to be increased as a calcinating temperature is increased in the increasing order of 750°C (Example 7), 800 (Example 6), 850°C (Example 5). It was recognized that a larger amount of Cs₆Fe₂O₅ (composite oxide) was formed by carrying out calcinating process at higher temperature in the final calcinating process. It was furthermore recognized that the intensity ratio ([the maximum peak intensity of the composite oxide]/[the maximum peak intensity of α-Fe₂O₃]) of the maximum peak intensity of α-Fe₂O₃ in the porous support to the maximum peak intensity of Cs₆Fe₂O₅ (composite oxide) was 2.3% (Example 5), 4.5% (Example 6), and 5.5% (Example 7), respectively, within a 2θ angle range of 20° to 40° in the catalyst for removing particulate matter in each filter type catalyst obtained in Examples 5 to 7. From these results, it is estimated that cesium contained in the catalyst for removing particulate matter remains mainly in the form of cesium oxide when a calcinating temperature is 750°C, and that a part is present in the composite oxide. <Particulate matter oxidizing activity test on the catalyst for removing particulate matter after a heat tolerance test>

A particulate mater oxidizing activity test was carried out on each filter type catalyst obtained in Examples 5 to 7 and Comparative example 6, after carrying out a heat tolerance test on the same. The content of each test is shown below.

### (Heat tolerance test)

A heat tolerance test was carried out by flowing a gas mixture composed of O₂ (10 volume%), CO₂ (10 volume%), H₂O (3 volume.%), and N₂ (balance) at a flow rate of 1L/minute to each filter type catalyst obtained in Examples 5 to 7 and Comparative example 6. The temperature of the gas mixture was increased from an initial temperature of room temperature to 750°C at a temperature increasing rate of 20°C/minute, and held at 750°C for 50 hours.

### (Particulate matter oxidizing activity test)

In a particulate matter oxidizing activity test, 50mg of carbon black (available from Tokai Carbon Co. Ltd.) serving as a simulated particulate matter, and 50mL of ethanol were first mixed. Thereafter, ultrasonic sound was irradiated for 10 minutes to the mixture to prepare a suspended solution. Subsequently, the obtained suspended solution was flowed in each filter type catalyst after the heat tolerance test from the top thereof. A process in which the suspended solution which had penetrated the filter was again flowed in the filter type catalyst from the top thereof was repeated. Such a process was repeated until the filtrate became transparent, thereby causing the suspended solution to impregnate the filter type catalyst. Then, the filter type catalyst impregnated with the suspended solution was heated in an N₂ gas flow at a temperature condition of 500°C for 10 minutes to remove ethanol. A sample in which carbon black was attached on the outer surface of the filter type catalyst was thereby obtained.

Subsequently, a gas mixture composed of O₂ (10 volume%), H₂O (10 volume%), and N₂ (balance) was flowed in the obtained sample at a flow rate of 15L/minutes. The temperature of the mixture gas (inflow gas) was increased at a temperature increasing rate of 20°C from an initial temperature of 200°C to 600°C. The amount of carbon black oxidized at an inflow gas temperature condition of 340°C to 360°C was calculated by analyzing the concentration of CO and CO₂ contained in the gas mixture (outflow gas) contacted with the sample at the inflow gas temperature condition. Thereafter, the oxidation rate of the particulate matter was calculated by converting the amount to an oxidation rate per one hour and one liter of the filter catalyst. Fig. 8 shows the obtained results.

As seen from the results shown in Fig. 8, it was recognized that the catalyst for removing particulate matter obtained in Examples 5 to 7 allows a sufficiently high particulate matter oxidizing rate, and sufficiently high particulate matter oxidizing activity. On the contrary, it was recognized that the catalyst for removing particulate matter for comparison obtained in Comparative example 6 provides a low particulate matter oxidizing rate, and an insufficient particulate matter oxidizing activity. It also was recognized that the particulate matter oxidizing rate of the catalyst for removing particulate matter was ranked in the higher rate order shown in the following equation: Example 5> Example 6> Example 7, and that the particulate matter oxidizing performance after heat tolerance test was improved by the higher calcinating temperature in the final calcinating process.

In consideration of the results in combination with those shown in Figs. 7 and 8, it is understood that the particulate matter oxidizing performance after the heat tolerance test is increased, when a larger amount of the cesium-iron composite oxide has been formed in the catalyst. From these results, it is estimated that the formation of the composite oxide (Cs₆Fe₂O₅) is accelerated by increased temperatures in the order of 750 °C, 800 °C, and 850°C when using iron oxide (100 mass%) as a support. The present inventors furthermore estimate that a loss of Cs component due to evaporation is sufficiently inhibited when the composite oxide is formed to fix the Cs component on the surface. This estimate is derived from the fact that the particulate matter oxidizing performance after the heat tolerance test is increased, when a larger amount of the cesium-iron composite oxide is formed (Example 5> Example 6> Example 7) in the catalyst for removing particulate matter (Examples 5 to 7) containing the composite oxide supported on the support.

As described above, the present invention can provide: a catalyst for removing particulate matter which has a sufficiently high particulate matter removing performance as well as sufficiently high heat tolerance, resulting in the capability to exhibit a sufficiently high particulate matter removing performance even after use under high temperature conditions; and a method for removing particulate matter using the catalyst for removing particulate matter.

Therefore, the catalyst for removing particulate matter of the present invention has an excellent particulate matter removing performance, and thus is particularly useful as a catalyst for removing the particulate matter contained in an exhaust gas emitted from an internal-combustion engine such as a diesel engine.

## Claims

1. A catalyst for removing particulate matter, with which particulate matter contained in an exhaust gas emitted from an internal-combustion engine is oxidized and removed, the catalyst comprising:
a porous support composed of a metal oxide containing not less than 75 mass % of iron oxide; and
at least any one of cesium and a composite oxide of cesium and iron which is supported on the porous support, wherein the total amount of cesium supported on the porous support is 5 to 30 parts by mass per 100 parts by mass of the porous support.

2. The catalyst according to claim 1, wherein at least one precious metal selected from the group consisting of ruthenium, rhodium, palladium, silver, iridium, platinum, and gold, is further supported on the porous support.

3. The catalyst according to claim 1 or 2,
wherein the metal oxide further contains at least one selected from the group consisting of cerium oxide, zirconium oxide, aluminum oxide, titanium oxide, and silicon oxide, and
the metal oxide contains 75 to 99 mass % of the iron oxide.

4. The catalyst according to any one of claims 1 to 3, wherein the composite oxide is represented by the compositional formula: CsₓFe_{y}O_{z} (where x is a value within a range of 1 to 6, y is a value within a range of 1 to 2, and z is a value within a range of 2.5 to 5).

5. The catalyst according to any one of claims 1 to 4, wherein the composite oxide is represented by the compositional formula: Cs₆Fe₂O₅.

6. The catalyst according to any one of claims 1 to 5, wherein the peak intensity ratio by powder X-ray diffraction between the iron oxide in the porous support and the composite oxide ([the maximum peak intensity of the composite oxide] / [the maximum peak intensity of the iron oxide]) is within a range of 1 to 20 %.

7. The catalyst according to any one of claims 1 to 6, wherein at least one member selected from the group consisting of alkaline earth metals and alkali metals other than cesium is further supported on the porous support.

8. A method for removing particulate matter, by which the particulate matter contained in an exhaust gas is oxidized and removed by supplying the exhaust gas into contact with the catalyst for removing particulate matter according to any one of claims 1 to 7.

## Patentansprüche

1. Katalysator zum Entfernen von teilchenförmigem Material, mit dem teilchenförmiges Material, das in einem Abgas enthalten ist, das von einem Verbrennungsmotor abgegeben wird, oxidiert und entfernt wird, wobei der Katalysator umfasst:
einen porösen Träger, der aus einem Metalloxid zusammengesetzt ist, das nicht weniger als 75 Massen-% Eisenoxid enthält, und
mindestens eines von Cäsium und einem Mischoxid von Cäsium und Eisen, das auf dem porösen Träger geträgert ist, wobei die Gesamtmenge von Cäsium, das auf dem porösen Träger geträgert ist, 5 bis 30 Massenteile pro 100 Massenteile des porösen Trägers beträgt.

2. Katalysator nach Anspruch 1, bei dem ferner mindestens ein Edelmetall, das aus der Gruppe, bestehend aus Ruthenium, Rhodium, Palladium, Silber, Iridium, Platin und Gold, ausgewählt ist, auf dem porösen Träger geträgert ist.

3. Katalysator nach Anspruch 1 oder 2, bei dem das Metalloxid ferner mindestens eines enthält, das aus der Gruppe, bestehend aus Ceroxid, Zirkoniumoxid, Aluminiumoxid, Titanoxid und Siliziumoxid, ausgewählt ist, und das Metalloxid 75 bis 99 Massen-% des Eisenoxids enthält.

4. Katalysator nach einem der Ansprüche 1 bis 3, bei dem das Mischoxid durch die Zusammensetzungsformel CsₓFe_{y}O_{z} (worin x ein Wert innerhalb eines Bereichs von 1 bis 6 ist, y ein Wert innerhalb eines Bereichs von 1 bis 2 ist und z ein Wert innerhalb eines Bereichs von 2,5 bis 5 ist) dargestellt ist.

5. Katalysator nach einem der Ansprüche 1 bis 4, bei dem das Mischoxid durch die Zusammensetzungsformel Cs₆Fe₂O₅ dargestellt ist.

6. Katalysator nach einem der Ansprüche 1 bis 5, bei dem das Peakintensitätsverhältnis zwischen dem Eisenoxid in dem porösen Träger und dem Mischoxid ([maximale Peakintensität des Mischoxids]/[maximale Peakintensität des Eisenoxids]) gemäß einer Pulverröntgenbeugung innerhalb eines Bereichs von 1 bis 20 % liegt.

7. Katalysator nach einem der Ansprüche 1 bis 6, bei dem ferner mindestens ein Mitglied, ausgewählt aus der Gruppe, bestehend aus Erdalkalimetallen und Alkalimetallen, die von Cäsium verschieden sind, auf dem porösen Träger geträgert ist.

8. Verfahren zum Entfernen von teilchenförmigem Material, durch das teilchenförmiges Material, das in einem Abgas enthalten ist, durch Inkontaktbringen des Abgases mit dem Katalysator zum Entfernen von teilchenförmigem Material nach einem der Ansprüche 1 bis 7 oxidiert und entfernt wird.

## Revendications

1. Catalyseur pour éliminer de la matière particulaire, avec lequel la matière particulaire contenue dans un gaz d'échappement émis par un moteur à combustion interne est oxydée et éliminée, le catalyseur comprenant :
un support poreux composé d'un oxyde de métal ne contenant pas moins de 75 % en masse d'oxyde de fer ; et
au moins un composé quelconque choisi parmi le césium et un oxyde composite de césium et de fer, qui est supporté sur le support poreux, dans lequel la quantité totale de césium supportée sur le support poreux est de 5 à 30 parties en masse pour 100 parties en masse du support poreux.

2. Catalyseur selon la revendication 1, dans lequel au moins un métal précieux sélectionné dans le groupe constitué des éléments ruthénium, rhodium, palladium, argent, iridium, platine et or, est en outre supporté sur le support poreux.

3. Catalyseur selon la revendication 1 ou 2,
dans lequel l'oxyde de métal contient en outre au moins un composé choisi dans le groupe constitué de l'oxyde de cérium, de l'oxyde de zirconium, de l'oxyde d'aluminium, de l'oxyde de titane et de l'oxyde de silicium, l'oxyde de métal contenant par ailleurs 75 à 99 % en masse de l'oxyde de fer.

4. Catalyseur selon l'une quelconque des revendications 1 à 3, dans lequel l'oxyde composite est représenté par la formule de composition suivante : CsₓFe_{y}O_{z} (dans laquelle x est une valeur se situant dans une plage de 1 à 6, y est une valeur se situant dans une plage de 1 à 2, et z est une valeur se situant dans une plage de 2,5 à 5).

5. Catalyseur selon l'une quelconque des revendications 1 à 4, dans lequel l'oxyde composite est représenté par la formule de composition suivante : Cs₆Fe₂O₅.

6. Catalyseur selon l'une quelconque des revendications 1 à 5, dans lequel le rapport d'intensité de pics de diffraction de rayons X sur poudre entre l'oxyde de fer dans le support poreux et l'oxyde composite ([pic d'intensité maximale de l'oxyde composite]/[pic d'intensité maximale de l'oxyde de fer]) se situe dans une plage de 1 à 20 %.

7. Catalyseur selon l'une quelconque des revendications 1 à 6, dans lequel au moins un élément sélectionné dans le groupe constitué de métaux alcalinoterreux et de métaux alcalins autres que le césium est en outre supporté sur le support poreux.

8. Procédé pour éliminer de la matière particulaire, par lequel la matière particulaire contenue dans un gaz d'échappement est oxydée et éliminée en mettant le gaz d'échappement en contact avec le catalyseur destiné à éliminer la ratière particulaire selon l'une quelconque des revendications 1 à 7.
